# EUROPEAN PATENT APPLICATION

(11) **EP 3 056 422 A1**
(43) Date of publication of application: **17.08.2016**
(21) Application number: 15460069.6
(22) Date of filing: 10.09.2015
(51) Int. Cl.: B63H 23/18, B63H 23/12, B63H 21/20

(54) **UNIVERSAL, HYBRID PROPULSION SYSTEM OF SMALL WATERCRAFT**

(30) Priority: 10.02.2015 PL 41122515
(71) Applicant: Politechnika Gdanska, 80-233 Gdansk (PL)
(72) Inventor: Litwin, Wojciech, 80-299 Gdansk (PL); Lesniewski, Wojciech, 80-627 Gdansk (PL)

(57) **Abstract**

Universal, hybrid propulsion system of small watercraft, in which combustion engine coupled by clutch with driven shaft is connected with driving shaft of electric motor system which is characterized in that between the combustion engine's clutch (4) and the clutch of the driven shaft (5) there is fitted an intermediate shaft (2) which through transmission (13) preferably of a belt type, is connected with the driving shaft (3) of the electric motor system (B). It is preferable for the driving shaft (3) to be fitted on both sides with rolling bearings of the electric motor system (10), the intermediate shaft (2) is fitted on both sides with rolling bearings of the intermediate shaft (9). The electric motor (B) is engaged through the clutch of electric motor (6).

## Description

The subject of the invention is a universal, small watercraft hybrid propulsion system which may be used in newly build or modernized vessels.
There are numerous variations of classic propulsion systems with shafting employing an electric motor. These systems rest on shock-absorbing pads which dampen engine vibrations. They come as direct-drive systems bypassing transmission. Such systems are additionally equipped with thrust bearings placed in a separate casing which has significant impact on the durability of the electric motor.
Manufacturers of electric systems for inland boats and ships also offer systems which include shafting. If it is required by the power of motor , there systems are additionally equipped with water-cooling.
There are also drive assemblies provided with through-shaft drive allowing for expanding the system by additional electric motors or combustion engines which provide drive to the common drive shaft.
Propulsion systems which allow for use of low-speed propellers are frequently equipped with additional reduction gear: belt drive, belt drive with extra axial bearings, toothed gear.
The largest number of hybrid solutions are offered as complete sets with combustion engines. The power ratio in those systems is set in a way allowing the electric motor to provide the vessel with the ability to move at speed equal to 2/3 of the design speed reached using combustion engine. Electric motors, most frequently of brushed type, are attached to the engine block and drive the shaft through a belt transmission located behind or in front of the main transmission.

Universal, hybrid propulsion system of small watercraft in which combustion engine coupled to driven shaft by clutch is connected with driving shaft of electric motor system through transmission which according to the invention is characterized in that between the combustion engine's clutch and the clutch of driven shaft there is located an intermediate shaft connected with the driving shaft of the electric motor by a transmission.
It is preferable for the transmission to be of belt type.
It is preferable for the driving shaft to be fitted on both sides with rolling bearings of electric motor system.
It is preferable for the intermediate shaft to be fitted on both sides with rolling bearings of intermediate shaft.
It is preferable for the electric motor to be coupled through the remotely operated clutch.

The proposed solution makes it possible to use electric propulsion or mixed electric-combustion one
( series hybrid or parallel hybrid) on existing watercraft, also on historic vessels undergoing overhaul, as well as on newly built ships. In order to install the propulsion system on an existing watercraft, the existing drive shaft (intermediate one) should be shortened and the newly designed system placed in its location. Following such a procedure the watercraft obtains a parallel hybrid propulsion system. According to the invention, in the propulsion system the drive shaft with its water submerged propeller is powered by:
- combustion engine (electric motor is disconnected, or works as a generator when sailing, at shipowner's request, after installation of one more clutch, it can also work in the generator mode while at berth),
- electric motor (combustion engine is disconnected, or its start-up takes place thanks to the electric motor),
- both combustion engine and electric motor work at the same time ( propulsion power is summed up).
Installing the described propulsion system does not make it necessary to reconstruct the existing, conventional propulsion system. This is of particular importance on, for example, historic vessels, where the shipowner does not want or is not allowed, to modernize existing engine room which may be out of order or unreliable, making it impossible for ship classification society to accept the vessel as fit for sailing. It is also quite significant that the system does not transmit the thrust force created by the vessel's propeller. Installing the system does not require reconstructing massive foundations of thrust bearing. In addition, the type and power of the installed electric motor is based on shipowner's preferences.

The proposed solution gives the possibility of installing an environmentally friendly propulsion system not just on new vessels but first and foremost on older watercraft undergoing modernization, making it possible for them to serve on shipping routes located in protected areas, including those of NATURA 2000 Program.

Embodiment of the invention is presented on the illustration presenting a schematic, isometric view of the propulsion system.
Combustion engine (A) is coupled with driven shaft (1) through combustion engine's clutch (4) and is connected with driving shaft (3) of electric motor system B through transmission gear (13). Intermediate shaft (2) is installed between the clutch of combustion engine (4) and the clutch of the driven shaft (5). The intermediate shaft (2) is connected to the driving shaft 3 of the electric motor system B through a belt transmission (13) whose one gear wheel is mounted on the intermediate shaft (2) and the second gear wheel (8) is mounted on the driving shaft (3) of the electric motor system B. The driving shaft (3) is fitted on both sides with rolling bearings of the electric motor system (10). The intermediate shaft (2) is fitted on both sides with rolling bearings of the intermediate shaft (9). The electric motor B is engaged through the electric motor clutch (6). The driven shaft (1) is fitted with a front bearing (11) and a stern tube bearing (12). Fitted into the driven shaft (1) behind the combustion engine A is the intermediate shaft (2), which through the transmission (13) connects the combustion engine system A with the electric motor system B.
The propulsion system is flexible in nature and during the design stage may be configured as required. The shipowner has the option of selecting the type of electric motor, transmission ratio type, size and kind of batteries, type of control etc. Depending on selected configuration the system may be qualified as completely electric, series hybrid or parallel hybrid one.

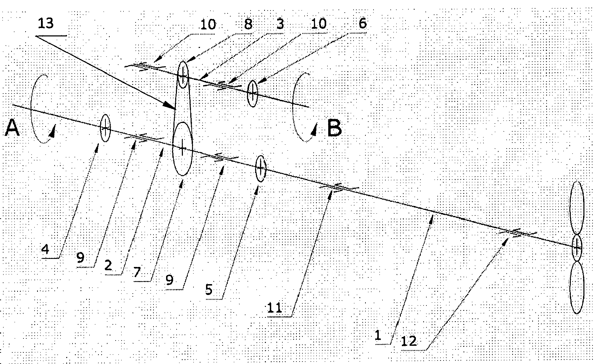

## Claims

1. Universal, hybrid propulsion system of a small watercraft, in which the combustion engine coupled by a clutch with driven shaft is connected with driving shaft of electric motor system through transmission **characterized in that** between the clutch of the combustion engine (4) and the clutch of the driven shaft (5) there is fitted an intermediate shaft (2) which is connected by the transmission (13) with the driving shaft (3) of the electric engine system (B).

2. The system of Claim 1 is **characterized in that** the transmission (13) is of a belt transmission type.

3. The system of Claim 1 or Claim 2 **characterized in that** the driving shaft (3) is fitted on both sides with rolling bearings of the electric motor system (10).

4. The system of Claim 1 or Claim 2 or Claim 3 **characterized in that** the intermediate shaft (2) is fitted on both sides with rolling bearings of the intermediate shaft (9).

5. The system of Claim 1 or Claim 2 or Claim 3 or Claim 4 **characterized in that**, the electric motor (8) is engaged though the clutch of the electric motor (6).
